# EUROPEAN PATENT SPECIFICATION

(11) **EP 0 908 470 B1**
(45) Date of publication and mention of the grant of the patent: **20.11.2002**
(21) Application number: 98124311.6
(22) Date of filing: 16.10.1991
(51) Int. Cl.: C08F 4/654, C08F 10/00

(54) **Olefin polymerization catalyst precursor**
Olefinpolymerisationskatalysatorvorläufer
Précurseur de catalyseur de polymérisation d'oléfines

(30) Priority: 18.10.1990 US 599550; 18.10.1990 US 599538; 18.10.1990 US 599610; 22.10.1990 US 600781; 22.10.1990 US 600898
(43) Date of publication of application: 14.04.1999
(62) Divisional of application: 91309518.8
(73) Proprietor: UNION CARBIDE CHEMICALS & PLASTICS TECHNOLOGY CORPORATION, Danbury, Connecticut 06817-0001 (US)
(72) Inventor: Job, Robert Charles, Houston, Texas, 77077 (US)
(74) Representative: Allard, Susan Joyce

(56) References cited:
- EP-A- 0 268 274
- EP-A- 0 319 173

## Description

This invention relates to a magnesium-containing, titanium-containing precursor of a catalyst component which can be used to produce a high activity olefin polymerization catalyst.

The production of polymers of α-olefins, particularly ethylene and propylene, has gained commercial acceptance. The products are inexpensive and exhibit a number of commercially useful properties. In the case of the polymerization of ethylene the process is uncomplicated in that the product type is not influenced by the manner in which the ethylene molecules add to the growing polymer chain and the polymeric product does not exist in stereoisomeric forms.

In the case of polymerization of propylene the presence of methyl groups provides the several types of product depending on the steric regularity with which units add to the growing polymeric chain. Most commercial polypropylene is crystalline and results from stereoregular addition of propylene units in a regular head-to-tail manner. Polypropylene in which the units add randomly is termed atactic. This amorphous form is less desirable and often must be removed as by extraction.

Also significant is the activity of the polymerization catalyst. The early trivalent titanium, chromium or vanadium catalysts were of low activity and the product contained a significant proportion of catalyst residues. Removal of such residues was required to obtain commercially satisfactory properties.

The more recent titanium-based polymerization catalysts are stereoregulating and have sufficient activity to avoid extraction and deashing steps. In terms employed conventionally, the high activity catalysts are formed from a solid procatalyst which typically contains magnesium, titanium and halide moieties, a cocatalyst which is usually an organoaluminum compound and a selectivity control agent (SCA). Each of these components influences the catalyst and polymer produced therefrom but the procatalyst seems to have the greatest influence.

US-A-4,330,649 describes a procatalyst obtained by heating a magnesium compound with a higher alcohol and an ester to produce a solution. This solution is added to TiCl₄ and an electron donor (ED) to form the procatalyst. US-A-4,472,521 describes reacting a magnesium alkoxide with a titanium alkoxide in an aromatic hydrocarbon. TiCl₄ and an ED are added to form a solid which is post-treated with transition metal halide. US-A-4,540,679 describes the production of a catalyst component by contacting a suspension of Mg(OC₂H₅)₂ in ethanol with CO₂. The addition of organoaluminum in hydrocarbon produces granular particles employed as support for titanium compound upon contact with TiCl₄. US-A-4728705 describes solubilizing Mg(OC₂H₅)₂ in ethanol with CO₂ and spray drying the resulting solution or using the solution to impregnate carrier particles. Either type of particle is useful in the production of procatalyst of desirable morphology.

A different catalyst is described in US-A-4,710,428, wherein a magnesium compound of the general formula

Mg₄(OR)₆(ROH)₁₀A (I)

is formed wherein R is lower alkyl and A is at least one anion having a total oxidation state of -2. This complex is reacted with tetravalent titanium halide, a halohydrocarbon and an ED to form a procatalyst. The use of the above complexes has advantages in that the complexes are crystals of desirable morphology in contrast to Mg(OC₂H₅)₂ which is not. The crystals can be converted to olefin polymerization catalyst precursors and to catalysts by largely conventional technology. The catalysts are active and produce polymer products of good properties. It would be of advantage to produce improved catalyst precursors and olefin polymerization catalysts whose use results in improved polymer product.

The invention provides complex magnesium-containing, titanium-containing compounds useful as precursors of high activity olefin polymerization catalysts and a process of polymerizing lower α-olefins employing such catalysts. The polyolefins obtained by use of the catalysts have good properties and are obtained in good yield.

Accordingly the invention provides an olefin polymerization procatalyst precursor which contains moieties of magnesium and titanium and which is obtainable by contacting a magnesium alkoxide, a titanium alkoxide and a phenolic compound, reacting the resulting product with a magnesium halide alcoholate, and removing alkanol from the resulting mixture, wherein each alkoxide moiety independently has up to 4 carbon atoms inclusive and the phenolic compound is selected from phenol and an activating group-substituted phenol. The procatalyst precursor can then be contacted with a halide of tetravalent titanium, an optional halohydrocarbon and an ED to form a solid procatalyst. The procatalyst in turn can then be contacted with an organoaluminum cocatalyst and an SCA to form a high activity olefin polymerization catalyst. The conversion of procatalyst precursor to procatalyst and of procatalyst to catalyst is largely conventional, but the procatalyst precursor can suitably be formed by a number of procedures and takes various forms and compositions depending upon the method of its preparation.

In line with the present invention the olefin polymerization procatalyst is produced by a two-step synthesis initially involving reaction of a magnesium alkoxide, wherein each alkoxide suitably has up to 4 carbon atoms, a titanium alkoxide, wherein each alkoxide suitably has up to 4 carbon atoms and a phenolic compound. The alkoxide moieties of the same or different alkoxide reactants are similar or dissimilar and the phenolic compound is selected from phenol and activating group-substituted phenol wherein the activating group is as previously defined.

The initial reaction suitably takes place in an inert reaction diluent by contacting the metal alkoxides and the phenolic compound at an elevated temperature. Reaction diluents that are suitable are relatively high-boiling so as to be liquid at the temperature of the contacting. Diluents such as chlorobenzene, toluene and isooctane are suitable. The temperature of the contacting suitably is from 60°C to 130°C and a pressure sufficient to maintain the reaction mixture in a non-gaseous phase is desirable. The initial product is a complex of the starting materials illustrated but not limited by the formula

Mg₃Ti(OR)₈X'₂ (V)

wherein R and X' have the previously stated meanings. This initial product can be obtained as a solution in the reaction diluent.

This initial product is then contacted with a magnesium halide alcoholate, preferably a hexaalcoholate, in which the alcohol moieties are ROH where R has the previously stated meaning. The magnesium halide can be MgCl₂ or MgBr₂, preferably MgCl₂. The initial complex and the magnesium halide alcoholate can be mixed in an inert reaction diluent which is the same as or different from the diluent used to prepare the initial complex. Preferably, the diluent is the same. The reactants are contacted and heated, for example at a temperature up to about 100°C, until a solution is obtained and then heated, for example from about 110°C to about 140'C, to remove alkanol from the mixture, often as an azeotrope with the inert diluent. The product, of somewhat variable composition, is obtained as opaque, spheroidal particles. This magnesium-containing, titanium-containing solid is an olefin polymerization procatalyst precursor and can be converted to a procatalyst by methods described below.

The olefin polymerization procatalyst precursor can be converted to a procatalyst by contact with a halide of tetravalent titanium, optionally with halohydrocarbon, and an ED. The halide of tetravalent titanium can be an aryloxy- or an alkoxy- di- or trihalide such as diethoxytitanium dichloride, dihexyloxytitanium dibromide, isopropyloxytitanium trichloride, or phenoxytitanium tribromide, or can be a titanium tetrahalide such as TiCl₄ or TiBr₄. A titanium tetrahalide is preferred, particularly TiCl₄.

The halohydrocarbon optionally employed in the production of procatalyst suitably has up to 12 carbon atoms, preferably up to 9 carbon atoms, and contains at least one halogen atom or in the case of aliphatic halohydrocarbons contains at least two halogens. Exemplary aliphatic halohydrocarbons include CH₂Cl₂, CH₂Br₂, CHCl₃, CCl₄, 1,2-dibromoethane, 1,1,3-trichloropropane, 1,1,2-trichloroethane, trichlorocyclohexane, dichlorofluoromethane and trichloroisooctane. Aromatic halohydrocarbons suitably employed include chlorobenzene, bromobenzene, dichlorobenzene and chlorotoluene. Of the aliphatic halohydrocarbons CCl₄ and 1,1,2-trichloroethane are preferred, but particularly preferred is chlorobenzene.

The electron donor employed in the procatalyst is an ED conventionally used in titanium-based olefin polymerization procatalyst. The ED can be free from active hydrogens. Examples of suitable electron donors include ethers, esters, ketones, amines, imines, amides, nitriles, phosphines, stibines, arsines and alcoholates. A preferred ED is an ester, particularly an alkyl ester of an aromatic monocarboxylic or dicarboxylic acid. Preferred ED's are ethyl benzoate, ethyl p-ethylbenzoate and diisobutyl phthalate. The ED can be a mixture of compounds but preferably is a single compound. Ethyl benzoate and diisobutyl phthalate are preferred.

The manner in which the procatalyst precursor, halide of tetravalent titanium, the halohydrocarbon when employed and the ED are contacted is material but not critical. Best results are obtained when the ED is added to the procatalyst precursor and the resulting mixture is added to at least a portion of the halide of tetravalent titanium. Alternatively, the halide of tetravalent titanium is added to a mixture of the procatalyst precursor and the ED. Other modifications are suitable but less preferred. The resulting solid is typically washed with a 50/50 mixture by volume of additional halide of tetravalent titanium and halohydrocarbon at least once and often twice or more times. This washing process, often termed a halogenation, is frequently aided by the additional presence of an acid halide, particularly an aromatic acid halide such as benzoyl chloride or phthaloyl chloride. Subsequent to contacting with a halide of tetravalent titanium and halohydrocarbon, the resulting solid procatalyst can be washed with a light hydrocarbon to remove unreacted titanium compounds.

In the preferred modification, the initial contacting of ED and procatalyst precursor is conducted at a temperature from ambient temperature to 150°C. Preferably, the materials are mixed at ambient temperature. Sufficient halide of tetravalent titanium and any acid halide are used to convert a substantial portion of the anion moieties of the procatalyst precursor to halide moieties. Sufficient ED is used so that the molar ratio of ED to Mg present in the procatalyst precursor is from 0.01:1 to 10:1, preferably from 0.06:1 to 0.4:1. The final washing produces procatalyst which is stable upon drying in the absence of O₂ and active hydrogen compounds or useful without drying in the formation of an olefin polymerization catalyst by reaction with a cocatalyst and SCA.

The cocatalyst is an organoaluminum compound of the type normally employed with titanium-based procatalysts in the production of high-activity olefin polymerization catalysts. Suitable organoaluminum compounds are alkylaluminum compounds such as trialkylaluminum compounds, alkylaluminum halide compounds and alkylaluminum alkoxide compounds wherein each alkyl independently has 2 to 6 carbon atoms. The preferred alkylaluminum compounds are free of halide moieties and particularly preferred are trialkylaluminum compounds such as triethylaluminum, triisobutylaluminum and diethylhexylaluminum. Triethylaluminum is especially preferred. The organoaluminum compound is suitably employed in sufficient quantity to provide from 1 mole to 150 moles of aluminum per mole of titanium in the procatalyst, preferably from 10 moles to 100 moles of aluminum per mole of titanium.

The SCA employed in catalyst production can be any conventionally utilized in olefin polymerization catalysts based on titanium. A suitable SCA is an ED such as those above for use in procatalyst production but may also be an organosilane of the formula R'_{q}si(OR)_{4-q} wherein R' is alkyl or aryl of up to 10 carbon atoms, R has the previously stated meaning and q is 1 or 2. A preferred SCA is an ester of an aromatic acid, e.g. ethyl p-ethylbenzoate, diisobutyl phthalate, or ethyl p-methylbenzoate, or an alkylalkoxysilane such as diisobutyldimethoxysilane, isopropyltrimethoxysilane or cyclohexylmethyldimethoxysilane. The SCA is suitably provided to give from 0.01 mole to 100 moles of SCA per mole of titanium in the procatalyst, preferably from 0.5 mole to 20 moles per mole of titanium.

The components of the olefin polymerization catalyst are contacted by largely conventional methods. In one modification, the components are contacted outside the polymerization zone as by mixing the components and introducing the preformed catalyst into the polymerization reactor. In an alternative modification, the catalyst components are introduced separately into the polymerization reactor and the catalyst is formed in situ. The olefin polymerization catalyst is useful in the polymerization of lower α-olefins under polymerization conditions and particularly in the polymerization of straight-chain α-olefins of up to 4 carbon atoms, i.e ethylene, propylene and 1-butene. The procedure of the polymerization process of the invention, by virtue of its use of a catalyst produced from the complex procatalyst precursors of the invention, provides polyolefin product having good properties in quantities which reflect the high activity of the catalyst. The polymerization product can be a homopolymer, e.g. polyethylene or polypropylene, when a single α-olefin monomer is supplied to the reactor. Alternatively, the product can be a copolymer (or terpolymer) such as EPR or polypropylene impact copolymer when two or more monomers are provided to the polymerization reactor.

The polymerization can be conducted as a gas-phase process employing one or more fluidized catalyst beds or can be conducted as a slurry-phase process employing as a diluent an inert material such as propane or a liquified monomer of the polymerization such as propylene. The molecular weight of the polymer product and thus to some extent the properties of the product are influenced by the provisions to the polymerization system of molecular hydrogen as is known in the art. The process can be conducted batch-wise or in a continuous or semi-continuous manner.

The catalyst productivity is often inversely related to selectivity so that highly active catalysts often afford polymer product of low stereoregularity. The catalysts of the invention exhibit good productivity while retaining a desirably high stereospecificity so that polymer is obtained in good quantities with sufficiently good properties that extraction and deashing steps are not required.

The invention will be further illustrated by reference to the following Example. In the Example the productivity of the catalyst (also termed "yield") is determined in kg of polymer product per gram of catalyst in a standard batch process of 1 hour. The stereospecificity of the catalyst and specifically the selectivity to isotactic product is determined by measuring the xylene solubles (XS) in accordance with the regulations of the U.S. Food and Drug Administration. The test for XS comprises dissolving a polymer sample in xylene under reflux in a flask. The flask is then placed in a water bath at 25°C for 1 hour without stirring. The precipitate formed is then removed by filtration and the solubles content is determined by evaporating an aliquot of the filtrate followed by drying and weighing the residue. The xylene solubles consist primarily of amorphous (atactic) polymer and a small amount of low molecular weight polymer. The bulk density of polymer product (B.D.) is determined in gm/cm³.

### Example I

A. A solution containing about 1% wt. Mg was prepared by mixing 36g (0.31 mole) of Mg(OC₂H₅)₂, 25.2g of 95% Ti(OC₂H₅)₄ (0.105 mole) and 22.7g (0.21 mole) of o-cresol in 670g of chlorobenzene in a sealed container and stirred overnight while the container was in a 130°C oil bath. The molar ratio of o-cresol/Mg/Ti was 2/3/1.
In a 0.23 litre (8 oz) bottle, 128.6g of this solution was mixed with 7.3g of MgCl₂.6C₂H₅OH (19.6 mmol) and 86g of chlorobenzene. The bottle and contents were heated in a 95°C oil bath and the contents were stirred for 2 hours at 450 rpm. The oil bath was heated to 105°C and the mixture stirred overnight. The resulting slurry was filtered while warm and the recovered solids were washed with chlorobenzene and isooctane and dried under flowing N₂. A yield of 6.8g of solid spheroids was obtained.
B. Employing the procedure of Example I.A. a solution of a molar cresol/Mg/Ti ratio of 1/3/1 was prepared. A 43.55g portion of this solution was mixed with 7.3g (19.6 mmol) of MgCl₂.6C₂H₅OH and 86g of chlorobenzene. The bottle was capped and placed in a 90°C oil bath as the contents were stirred at 450 rpm. After 2 hours the bottle was uncapped and some foaming was observed as the oil bath temperature was raised to 93°C. After stirring overnight, the resulting slurry was filtered while warm and the recovered solids washed with chlorobenzene (warm and then cool), twice with isooctane and dried under flowing N₂. Cream colored, rough spheroids (9.2g) were obtained.
C. The procatalyst precursors of Example I.A. and B were converted to procatalysts by employing a digest at 110°C for 60 minutes in 150 ml of TiCl₄, utilizing sufficient solution to provide 30-50 mmol magnesium. Sufficient diisobutyl phthalate was also present to provide a concentration of about 40 mmol/litre. The resulting solid product was washed at 110°C with 150 ml of a 50/50 by volume mixture of chlorobenzene and TiCl₄ containing 6 mmol/litre of phthaloyl chloride. This was followed by a 30 minute wash at 110°C with the 50/50 mixture. The resulting solid procatalyst was washed twice with isooctane at room temperature and dried under N₂ at 50°C. The procatalyst from Example I.A. contained 2.4% wt. Ti, 18.7% wt. Mg and 60.0% wt. Cl. The procatalyst from Example I.B contained 2.25% wt. Ti, 16.0% wt. Mg and 57.7% wt. Cl.
D. The procatalysts of Example I.C. were converted to catalysts and employed to polymerize propylene by mixing with triethylaluminum cocatalyst and diisobutyldimethoxysilane SCA. The quantities of components gave a molar Al/Si/Ti ratio of 70/20/1. The components were mixed prior to injection into a 1-litre autoclave containing propylene and the resulting polymerization using liquid propylene diluent took place at 65°C for 1 hour. Molecular hydrogen (43 mmol) was also added. The catalyst was injected into the autoclave with contents heated to 65°C. The final polymer was obtained as essentially spheroidal particles. The evaluation of the polymers is shown in Table I.

**TABLE I**

| Source of Precursor | Yield | XS | BD |
|---|---|---|---|
| IA | 41.3 | 3.3 | 0.348 |
| IB | 38.8 | 3.2 | 0.366 |

A similar polymerization using a catalyst produced and evaluated by the general methods of Example V.A, C and D but using the R type of catalyst addition gave a yield of 37.8%, an XS value of 3.9% and the polymer had B.D. of 0.407.

## Claims

1. An olefin polymerization procatalyst precursor which contains moieties of magnesium and titanium and which is obtainable by contacting a magnesium alkoxide, a titanium alkoxide and a phenolic compound, reacting the resulting product with a magnesium halide alcoholate, and removing alkanol from the resulting mixture, wherein each alkoxide moiety independently has up to 4 carbon atoms inclusive and the phenolic compound is selected from phenol and an activating group-substituted phenol.

2. A precursor according to claim 1 wherein the contacting of the magnesium alkoxide, titanium alkoxide and phenolic compound takes place at a temperature in the range of from 60 to 130°C.

3. A precursor according to claim 1 or claim 2 wherein the phenolic compound is selected from phenol, o-cresol, 3-methoxyphenol, 4-dimethylaminophenol and 2,6-dimethyphenol.

4. A precursor according to any one of the preceding claims wherein the magnesium halide alcoholate is a hexalcoholate.

5. A precursor according to any one of the preceding claims wherein the magnesium halide is MgCl₂ or MgBr₂.

6. A precursor according to any one of the preceding claims wherein reacting the resultant products with a magnesium halide alcoholate takes place at a temperature up to about 100°C.

7. A precursor according to any one of the preceding claims wherein the removal of alkanol takes place at a temperature of from 110 to 140°C.

8. A precursor according to any one of claims 1 to 7 wherein each alkoxide is ethoxide, the magnesium halide alcoholate is magnesium chloride hexaalcoholate and the phenolic compound is o-cresol.

9. A solid olefin polymerization procatalyst obtainable by contacting a procatalyst precursor as claimed in any one of claims 1 to 8 with a halide of tetravalent titanium, an optional halohydrocarbon and an electron donor.

10. A procatalyst according to claim 9 wherein the halide of tetravalent titanium is titanium tetrachloride and the electron donor is an alkyl ester of an aromatic monocarboxylic or dicarboxylic acid.

11. A high activity olefin polymerization catalyst obtainable by contacting a procatalyst as claimed in claim 9 or claim 10 with an organoaluminum compound cocatalyst and a selectivity control agent.

12. A catalyst according to claim 11 wherein the cocatalyst is trialkylaluminum and the selectivity control agent is an alkyl ester of an aromatic monocarboxylic or dicarboxylic acid or an organosilane of the formula
R'_{q}Si(OR)_{4-q}
wherein R' is alkyl or aryl of up to 10 carbon atoms, R is alkyl of up to 4 carbon atoms and q is 1 or 2.

13. A process for polymerizing a lower α-olefin having up to 4 carbon atoms which comprises contacting at least one lower α-olefin having up to 4 carbon atoms under polymerization conditions with a catalyst as claimed in claim 11 or 12.

14. A process according to claim 13 wherein the lower α-olefin is propylene.

## Patentansprüche

1. Olefinpolymerisationsprokatalysatorvorläufer, der Einheiten mit Magnesium und Titan enthält und der erhältlich ist durch Inberührungbringen eines Magnesiumalkoxids, eines Titanalkoxids und einer phenolischen Verbindung, Umsetzen des resultierenden Produkts mit einem Magnesiumhalogenidalkoholat und Entfernen des Alkanols aus der resultierenden Mischung, wobei jede Alkoxideinheit unabhängig voneinander bis zu einschließlich 4 Kohlenstoffatome aufweist und die phenolische Verbindung aus Phenol und einem aktivierenden gruppensubstituierten Phenol ausgewählt ist.

2. Vorläufer nach Anspruch 1, wobei das Inberührungbringen des Magnesiumalkoxids, Titanalkoxids und der phenolischen Verbindung bei einer Temperatur im Bereich von 60 bis 130°C stattfindet.

3. Vorläufer nach Anspruch 1 oder 2, wobei die phenolische Verbindung ausgewählt ist aus Phenol, o-Kresol, 3-Methoxyphenol, 4-Dimethylaminophenol und 2,6-Dimethylphenol.

4. Vorläufer nach einem der vorstehenden Ansprüche, wobei das Magnesiumhalogenidalkoholat ein Hexaalkoholat ist.

5. Vorläufer nach einem der vorstehenden Ansprüche, wobei das Magnesiumhalogenid MgCl₂ oder MgBr₂ ist.

6. Vorläufer nach einem der vorstehenden Ansprüche, wobei Umsetzen des resultierenden Produkts mit einem Magnesiumhalogenidalkoholat bei einer Temperatur bis zu ungefähr 100°C stattfindet.

7. Vorläufer nach einem der vorstehenden Ansprüche, wobei die Entfernung von Alkanol bei einer Temperatur von 110 bis 140°C stattfindet.

8. Vorläufer nach einem der Ansprüche 1 bis 7, wobei jedes Alkoxid Ethoxid ist, das Magnesiumhalogenidalkoholat Magnesiumchloridhexaalkoholat ist und die phenolische Verbindung o-Kresol ist.

9. Fester Olefinpolymerisationsprokatalysator, erhältlich durch Inberührungbringen eines Prokatalysatorvorläufers wie in einem der Ansprüche 1 bis 8 beansprucht, mit einem Halogenid des tetravalenten Titans, einem optionalen Halogenkohlenwaserstoff und einem Elektronendonor.

10. Prokatalysator nach Anspruch 9, wobei das Halogenid des tetravalenten Titans Titantetrachlorid ist und der Elektronendonor ein Alkylester einer aromatischen Monocarbon- oder Dicarbonsäure ist.

11. Olefinpolymerisationskatalysator mit hoher Aktivität, erhältlich durch Inberührungbringen eines Prokatalysators wie in Anspruch 9 oder 10 beansprucht, mit einem Organoaluminiumverbindungscokatalysator und einem Selektivitätskontrollmittel.

12. Katalysator nach Anspruch 11, wobei der Cokatalysator Trialkylaluminium ist und das Selektivitätskontrollmittel ein Alkylester einer aromatischen Monocarbon- oder Dicarbonsäure oder ein Organosilan der Formel
R'_{q}Si(OR)_{4-q}
ist, worin R' Alkyl oder Aryl mit bis zu 10 Kohlenstoffatomen ist, R Alkyl mit bis zu 4 Kohlenstoffatomen ist und q gleich 1 oder 2 ist.

13. Verfahren zur Polymerisation eines niederen α-Olefins mit bis zu 4 Kohlenstoffatomen, das Inberührungbringen mindestens eines niederen α-Olefins mit bis zu 4 Kohlenstoffatomen unter Polymerisationsbedingungen mit einem Katalysator wie in Anspruch 11 oder 12 beansprucht, umfasst.

14. Verfahren nach Anspruch 13, wobei das niedere α-Olefin Propylen ist.

## Revendications

1. Précurseur de procatalyseur de polymérisation d'oléfines, qui contient des parties magnésium et titane et qui peut être obtenu en mettant en contact un alcoxyde de magnésium, un alcoxyde de titane et un composé phénolique, en faisant réagir le produit résultant avec un alcoolate d'halogénure de magnésium et en éliminant l'alcanol du mélange résultant, dans lequel chaque partie alcoxyde comporte indépendamment jusqu'à 4 atomes de carbone et le composé phénolique est choisi parmi le phénol et un phénol substitué avec un groupe activateur.

2. Précurseur selon la revendication 1, dans lequel la mise en contact de l'alcoxyde de magnésium, de l'alcoxyde de titane et du composé phénolique a lieu à une température comprise entre 60 et 130°C.

3. Précurseur selon la revendication 1 ou la revendication 2, dans lequel le composé phénolique est choisi parmi le phénol, l'o-crésol, le 3-méthoxyphénol, le 4-diméthylaminophénol et le 2,6-diméthylphénol.

4. Précurseur selon l'une quelconque des revendications précédentes, dans lequel l'alcoolate d'halogénure de magnésium est un hexaalcoolate.

5. Précurseur selon l'une quelconque des revendications précédentes, dans lequel l'halogénure de magnésium est MgCl₂ ou MgBr₂.

6. Précurseur selon l'une quelconque des revendications précédentes, dans lequel la réaction des produits résultants avec un alcoolate d'halogénure de magnésium a lieu à une température allant jusqu'à 100°C environ.

7. Précurseur selon l'une quelconque des revendications précédentes, dans lequel l'élimination de l'alcanol a lieu à une température comprise entre 110 et 140°C.

8. Précurseur selon l'une quelconque des revendications 1 à 7, dans lequel chaque alcoxyde est un éthoxyde, l'alcoolate d'halogénure de magnésium est l'hexaalcoolate de chlorure de magnésium et le composé phénolique est l'o-crésol.

9. Procatalyseur de polymérisation d'oléfines solide pouvant être obtenu en mettant en contact un précurseur de procatalyseur selon l'une quelconque des revendications 1 à 8 avec un halogénure de titane tétravalent, un halohydrocarbure éventuel et un donneur d'électrons.

10. Procatalyseur selon la revendication 9, dans lequel l'halogénure de titane tétravalent est le tétrachlorure de titane et le donneur d'électrons est un ester alkylique d'un acide aromatique monocarboxylique ou dicarboxylique.

11. Catalyseur de polymérisation d'oléfines de haute activité pouvant être obtenu en mettant en contact un procatalyseur selon la revendication 9 ou la revendication 10 avec un cocatalyseur constitué d'un composé organoaluminium et un agent de contrôle de sélectivité.

12. Catalyseur selon la revendication 11, dans lequel le cocatalyseur est un trialkylaluminium et l'agent de contrôle de sélectivité est un ester alkylique d'un acide aromatique monocarboxylique ou dicarboxylique ou un organosilane de formule
R'_{q}Si(OR)_{4-q}
dans laquelle R' est alkyle ou aryle comportant jusqu'à 10 atomes de carbone, R est alkyle comportant jusqu'à 4 atomes de carbone et q est 1 ou 2.

13. Procédé pour la polymérisation d'une α-oléfine inférieure comportant jusqu'à 4 atomes de carbone, qui comprend la mise en contact d'au moins une α-oléfine inférieure comportant jusqu'à 4 atomes de carbone dans des conditions de polymérisation avec un catalyseur selon les revendications 11 ou 12.

14. Procédé selon la revendication 13, dans lequel l'α-oléfine inférieure est le propylène.
